# EUROPEAN PATENT SPECIFICATION

(11) **EP 2 202 096 B1**
(45) Date of publication and mention of the grant of the patent: **11.05.2016**
(21) Application number: 09014421.3
(22) Date of filing: 18.11.2009
(51) Int. Cl.: B60C 11/03, B60C 11/12, B60C 11/16

(54) **Pneumatic tire**
Luftreifen
Pneu

(30) Priority: 24.12.2008 JP 2008328087
(43) Date of publication of application: 30.06.2010
(73) Proprietor: Sumitomo Rubber Industries, Ltd., Hyogo-ken (JP)
(72) Inventor: Kageyama, Naoki, Kobe-shi Hyogo 651-0072 Hyogo-ken (JP)
(74) Representative: Manitz, Finsterwald & Partner GbR

(56) References cited:
- DE-A1-102007 053 609
- JP-A- 2007 050 718
- US-A1- 2004 231 775

## Description

### Background of the invention

The present invention relates to a pneumatic tire having a tread surface provided with blind holes for accepting the installation of studs.

In the case of studded tires provided with tread patterns comprising tread elements such as blocks, lugs and ribs, the studs which are fitted in blind holes, are generally positioned near centers of the respective tread elements. Here, the term "center" does not necessarily mean the center in a strict sense such as the centroid of the tread element. The "center" may be a center in a direction traversing the width of the tread element such as lug or rib or a center in a longitudinal direction of the tread element.

The reason to position a stud near such a center is to secure durability of the tread element. If the stud or the blind hole therefor is positioned largely off the center, then there is a possibility that the tread element is easily broken during running and finally the stud is dropped out of the blind hole.

On the other hand, in order to reduce tire noise during running, a pneumatic tire especially that for passenger cars is generally provided with a tread pattern having a tread elements' arrangement such that the tread elements are arranged at variable pitches in the tire circumferential direction and/or the tread elements disposed in one half of the tread portion on one side of the tire equator are circumferentially shifted from those on the other half.
Accordingly, the positions of the studs are highly limited by the tread pattern in view of the durability even if there is room for improvement in view of the traction, noise and vibration of the studded tire.
US 2004/0231775 A1 relates to a pneumatic tire in accordance with the preamble of claim 1.

### summary of the Invention

It is therefore, an object of the present invention to provide a pneumatic tire, which can offer more flexibility and freedom in designing the tread pattern and laying out the studs in order to improve tire performances on snowy and icy roads, without sacrificing the durability.
This object is satisfied by a pneumatic tire in accordance with claim 1, which comprises:
a tread portion defining a ground contacting width and provided with a plurality of circumferential rows of a plurality of blocks, the plurality of blocks defined by a plurality of main grooves extending continuously in the tire circumferential direction, a plurality of transverse grooves extending between the main grooves, and a plurality of transverse grooves extending between the main grooves and tread edges,
the above-mentioned circumferential rows including at least one circumferential row whose blocks include a plurality of bored blocks each provided in the top surface thereof with a blind hole for installing a stud, wherein the blind hole is disposed axially outward of a position spaced apart from the tire equator by an axial distance of at least 13 % of the ground contacting width, and every two circumferentially adjacent blind holes are shifted from each other in the tire axial direction, and
the above-mentioned plurality of bored blocks including at least one bored block whose blind hole is shifted towards the periphery of the bored block and towards one of the main grooves, and which is provided with a reinforcing part for reinforcing the blind hole, wherein the reinforcing part protrudes into the main groove with decreasing the groove width of the main groove and is protrudingly formed so as to provide a wall thickness (t) of at least 5 mm for a wall surrounding the blind hole, with said plurality of blocks inclusive of the bored blocks having a geometrically same configuration excepting the protrudingly provided reinforcing part.
In the following description, various dimensions, positions and the like refer to those under a normally inflated unloaded condition of the tire unless otherwise noted.
The ground contacting width Tw is the axial distance between the tread edges 2e measured in the normally inflated unloaded condition of the tire.
The tread edges 2e are the axial outermost edges of the ground contacting region of the tire at camber angle of 0 degree under a normally inflated loaded condition.

The normally inflated unloaded condition is such that the tire is mounted on a standard wheel rim and inflate to a standard pressure but loaded with no tire load.

The normally inflated loaded condition is such that the tire is mounted on the standard wheel rim and inflate to the standard pressure and loaded with the standard tire load.

The standard wheel rim is a wheel rim officially approved for the tire by standard organization, i.e. JATMA (Japan and Asia), T&RA (North America), ETRTO (Europe), STRO (Scandinavia) and the like. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various Cold inflation Pressures" table in TRA or the like. The standard load is the "maximum load capacity" in JATMA, the "Load Capacity" in ETRTO, the maximum value given in the above-mentioned table in TRA or the like.
In case of passenger car tires, however, the standard pressure and standard tire load are uniformly defined by 180 kPa and 88 % of the maximum tire load, respectively.

### Brief Description of the Drawings

Fig.1 is a developed partial plan view of a pneumatic tire according to the present invention showing the tread portion thereof.

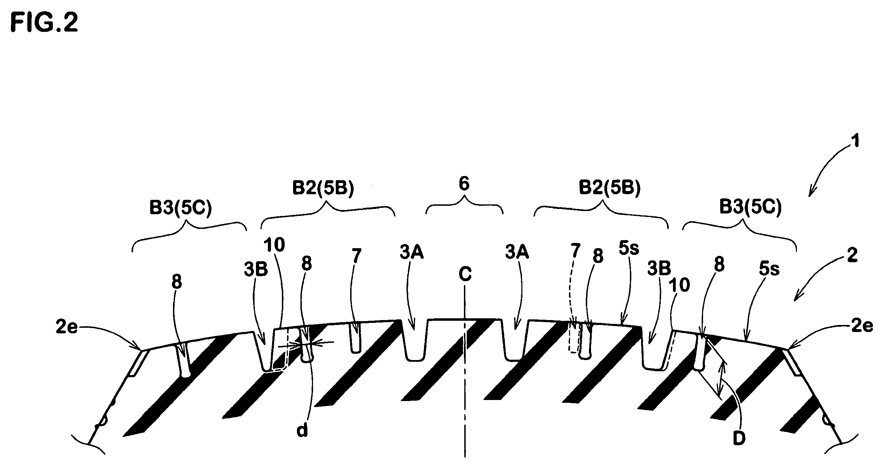

Fig.2 is a cross sectional view of the tread portion taken along line A-A in Fig.1.
Fig.3 is an enlarged partial plan view showing the tread portion.
Fig.4 is an enlarged perspective view of a stud.
Fig.5(a) is a perspective view of a bored block provided with a hole in which the stud is fitted.
Fig.5(b) is a perspective view of the bored block in a state in which the stud is installed.
Fig.6(a) is a top view of another example of the bored block.
Fig.6(b) is a top view of still another example of the bored block.

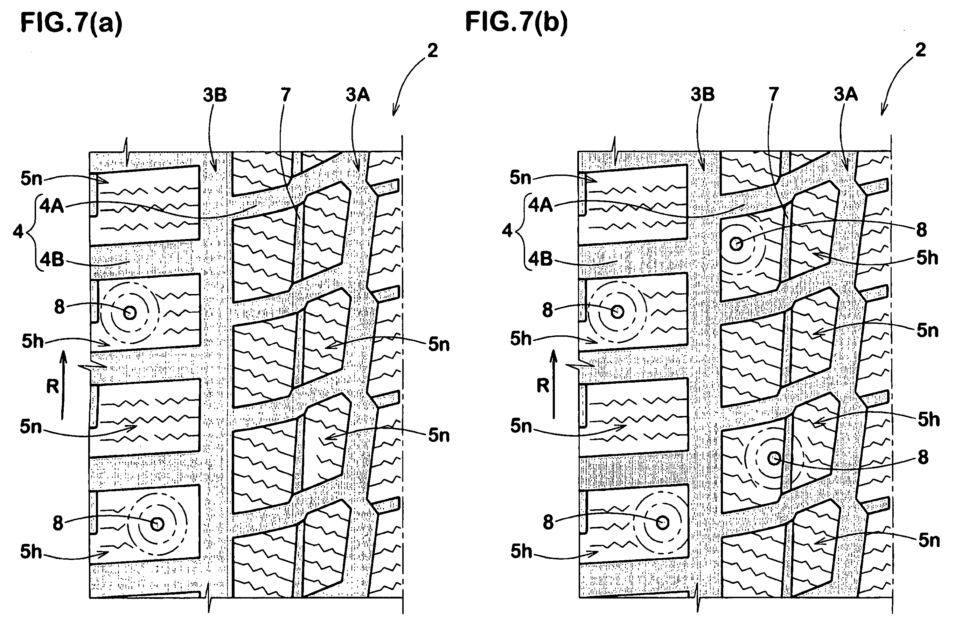

Figs.7(a) and 7(b) are views similar to Fig.1 showing tread portions of tires Ref.1 and Ref.2 used in the undermentioned comparative tests.

### Description of the Preferred Embodiments

Embodiments of the present invention will now be described in detail in conjunction with the accompanying drawings.

The pneumatic tire according to the present invention comprises a tread portion 2, a pair of bead portions, a pair of sidewall portions extending between the tread edges and the bead portions, a carcass extending between the bead portions, and a tread reinforcing belt disposed radially outside the carcass in the tread portion as usual.

The tread portion 2 is provided with a tread pattern comprising a large number of blocks 5 in a plurality of circumferential rows B. In each of the rows B, all of the blocks 5 constituting the row have a geometrically same configuration excepting the undermentioned reinforcing part 10 protrudingly provided on some of the blocks.

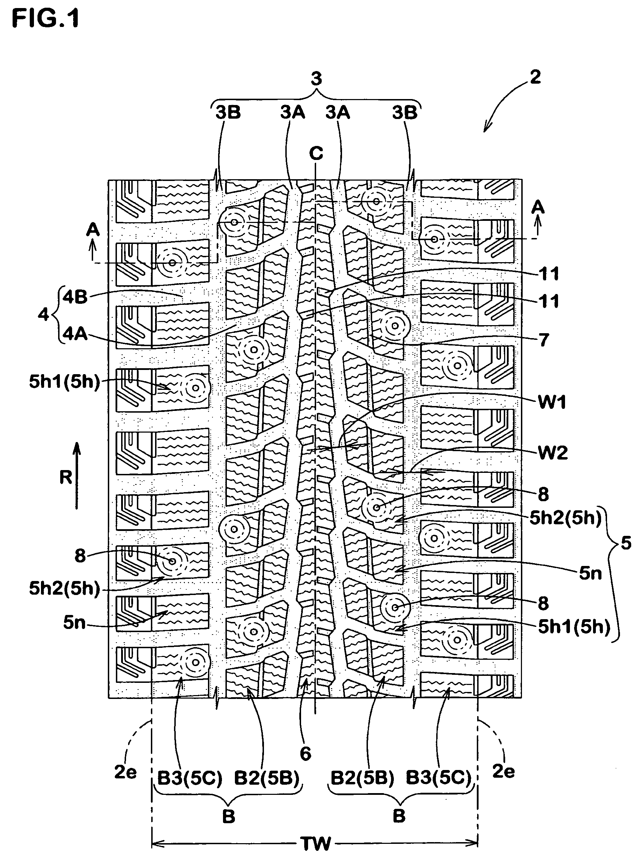

In the following embodiments, the pneumatic tires are a passenger car tire provided with a unidirectional tread pattern (In Fig.1, arrow R denotes the intended rotational direction). The blocks 5 are arranged at variable pitches in the circumferential direction, and the blocks 5 disposed in one half of the tread portion on one side of the tire equator are circumferentially sifted from those on the other half by about one half of one pitch.

The present invention is however, not limited to such a unidirectional tread pattern. The tread pattern can be a bidirectional pattern. More specifically, one half of the tread pattern is point symmetrical about a point on the tire equator. Further, the present invention is not limited to a variable-pitch arrangement and not limited to such an arrangements that one half shifts from the other half.

In order to form the circumferential rows B of the circumferentially and axially separated blocks 5, the tread portion 2 is provided with
a plurality of main grooves 3 extending continuously in the tire circumferential direction, and
a plurality of transverse grooves 4 extending from the main grooves 3.

The main grooves 3 include:
an axially outer shoulder main groove 3B disposed on each side of the tire equator C, and
an axially inner crown main groove 3A disposed on each side of the tire equator C or disposed along the tire equator C.

In order to secure a sufficient ground contacting area for running on icy roads, and at the same time, to prevent the grooves from becoming clogged by the packed snow during running on snowy roads, in the case of a passenger car tire, it is preferable that the groove width w1 of the crown main groove 3A and the groove width w2 of the shoulder main groove 3B are set in a range of from not less than 2 %, more preferably not less than 3 %, but not more than 9 %, more preferably not more than 6 % of the ground contacting width Tw, and that the groove depths of the main grooves 3A and 3B are set in a range of not less than 5 mm, more preferably not less than 6 mm, but not more than 10 mm, more preferably not more than 9 mm.

In the embodiment shown in Fig.1, the crown main grooves 3A are a zigzag groove which is made up of alternate short straight segments and long straight segments.
The use of such a zigzag groove is preferred because the axial component of the groove edges is increased, and thereby the friction in the tire circumferential direction can be increased on icy roads, and on the other hand, on snowy roads, the snow which exists between the tread and road and is packed into the zigzag groove, is increased in the shearing force and can produce a large traction or braking force.
However, it is also possible to use a gently curved zigzag groove, namely a wavy groove and even a straight groove for the crown main grooves 3A.

In the embodiment shown in Fig.1, an annular region between the two crown main grooves 3A is formed as a center rib 6 extending along the tire equator C continuously in the tire circumferential direction.

The center rib 6 in this example is provided with narrow grooves 11 extending from its edges and terminating within the rib for example at positions near the center line of the rib, whereby the circumferential rigidity of the center rib 6 is reduced to balance with those of the block rows B and thereby to prevent uneven wear of the center rib 6.
As another embodiment, instead of the two crown main grooves 3A, a single crown main groove 3A extending along the tire equator C can be formed as described above. In this case, accordingly, the center rib 6 is not formed.

In this embodiment, the above-mentioned shoulder main grooves 3B extend substantially straight in the tire circumferential direction. As a result, the portions of the blocks adjacent to the shoulder main grooves 3B are increased in the lateral stiffness or rigidity which facilitates an improvement in the steering stability during cornering. However, it is also possible to configure the shoulder main groove 3B as a zigzag groove or a wavy groove.

The above-mentioned transverse grooves 4 include:
middle transverse grooves 4A extending between the crown main groove(s) 3A and shoulder main grooves 3B, and
shoulder transverse grooves 4B extending between the shoulder main grooves 3B and the tread edges 2e.

In the unidirectional tread pattern in this embodiment, the middle transverse grooves 4A are inclined towards the opposite direction to the intended rotational direction R, while extending from the crown main groove(s) 3A to the shoulder main grooves 3B, thereby the circumferential component of the edges of the blocks 5 is increased, which can facilitate an improvement of on-the-ice performance.
on the other hand, the shoulder transverse grooves 4B are substantially parallel to the tire axial direction. This facilitates an increase in the lateral stiffness or rigidity of the shoulder blocks 5C formed therebetween.
Preferably, the groove widths and depths of the middle transverse grooves 4A and shoulder transverse grooves 4B are set to be the same or slightly less than those of the main grooves 3.

Thus, the above-mentioned block rows B include:
two rows B2 of middle blocks 5B defined by the middle transverse grooves 4A, the crown main groove(s) 3A and the shoulder main grooves 3B, and
two rows B3 of shoulder blocks 5C defined by the shoulder transverse grooves 4B, the shoulder main grooves 3B and the tread edges 2e.

The blocks 5B and 5C are each provided with a plurality of sipes S. The sipe is a cut or very narrow groove having groove width of from almost zero to 1 mm. The sipes s provide suppleness for the blocks and allow such appropriate blocks' deformation that can increase the contact area between the blocks 5s and icy road surface. Further, the sipes S absorb a water film between the tire and icy road and improve the grip performance of the tire.

In this embodiment, the middle blocks 5B are each provided with a narrow longitudinal groove 7 having a width of more than 1 mm and extending thereacross in substantially parallel with the tire circumferential direction at the almost center of the block in the tire axial direction.

The blocks 5 (5B/5C) in each of the middle block row B2 and shoulder block row B3 include:
a plurality of bored blocks 5h each provided in its ground-contacting top surface 5s with a hole 8 in which a stud P is installed, and
a plurality of blocks 5n without a hole 8.

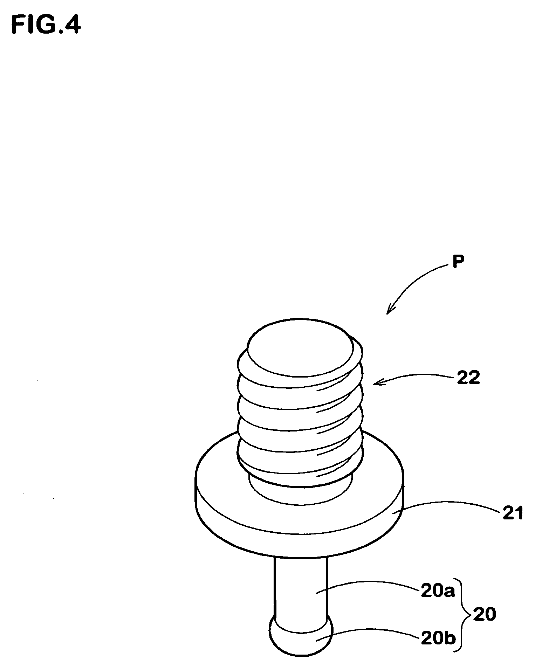

The stud P is, as shown in Fig.4, made up of an anchor part 20 inserted and left in the blind hole 8, a flange part 21 which contacts with the top surface of the block and from which the above-mentioned anchor part 20 protrudes, and
a spike part 22 protruding from the flange part 21 towards the opposite direction to the protruding direction of the anchor part 20.

The anchor part 20 comprises
a cylindrical main portion 20a having a diameter substantially constant along the length thereof, and
an end portion 20b larger in the diameter than the main portion 20a.In this example, the end portion 20b is bulb-shaped.

The flange part 21 is a round plate having a considerably-large diameter.

The spike part 22 is cylindrical and has a diameter which is larger than the diameter of the cylindrical main portion 20a but smaller than the diameter of the flange part 21. In this example, the spike part 22 is provided with a thread groove in order to increase the friction with the road surface.

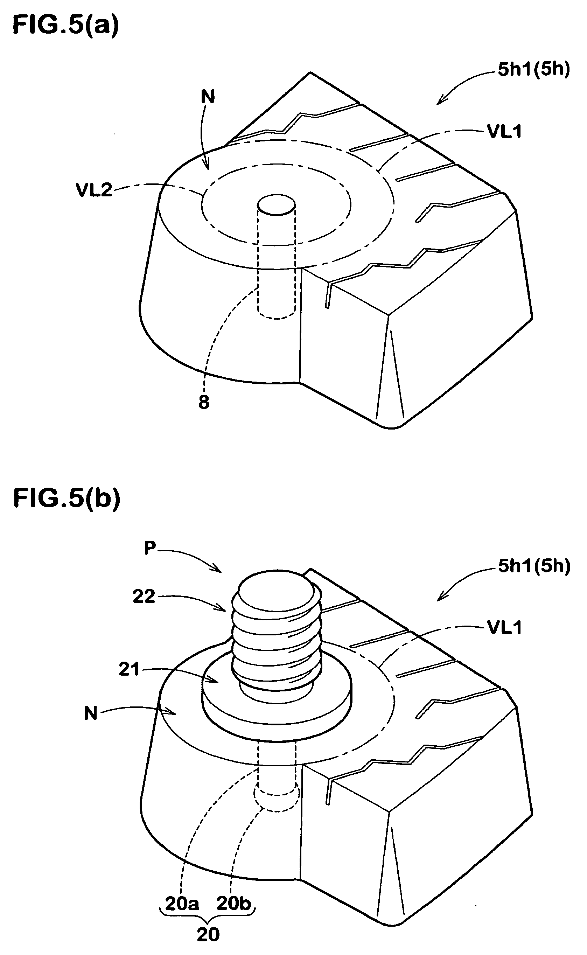

As shown in Figs.5(a) and 5(b), the stud P is installed on the tread portion of the pneumatic tire by pushing the anchor part 20 into the blind hole 8.

In this embodiment, the blind hole 8 is a circular blind hole having an inside diameter (d) which is substantially same as the outside diameter of the cylindrical main portion 20a of the anchor part 20. Therefore, the above-mentioned end portion 20b having the larger diameter is constricted by the inside wall of the blind hole 8 to retain the stud P. Even so, it is preferable that the anchor part 20 is put in the blind hole 8 together with an adhesive agent. For example, an anaerobic adhesive can be preferably used.

For example, the depth D of the blind hole 8 is from 8 to 12 mm, and the inside diameter (d) is from 2 to 3 mm.

Preferably, the zone in which the blind holes 8 are formed, is provided on each side the tire equator C, and the axial distance ws from the tire equator c to the axially inner bound of the zone is not less than 13 %, more preferably not less than 15 % of the ground contacting width Tw, whereby the tread center zone where the ground pressure becomes relatively high is not provided with studs P. As a results, damages due to studs P and high ground pressure can be prevented and the durability can be improved.

In each of the middle block rows B2 and shoulder block rows B3, every two circumferentially adjacent holes 8 are shifted from each other in the tire axial direction. In other words, the blind holes 8 are positioned at two or more different axial positions, therefore, the blocks in each row include two or more kinds of bored blocks 5h which are different in the axial position of the blind hole.

If the circumferentially adjacent holes 8 are formed at the same axial position, the studs scratch the same position of the road surface and dig a dent, and as a result, it becomes difficult to obtain a sufficient traction and braking force. In this embodiment, by the above-mentioned arrangement, such drawback can be avoided.

The bored blocks 5h include a first bored block 5h1 and a second bored block 5h2, wherein
the blind hole 8 of the first bored block 5h1 shifts toward the main groove 3 (3B) whereas the blind hole 8 of the second bored block 5h2 is positioned near the axial center of the block when compared with the first bored block 5h1.

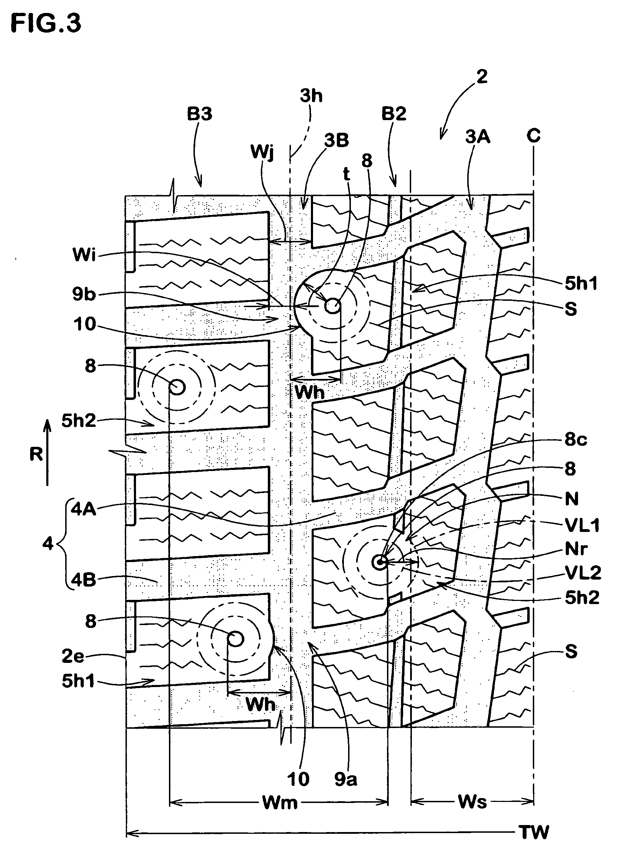

Preferably, as shown in Fig.3, on each side of the tire equator C, the axial distance wm between
the axially innermost hole 8 (that of the second bored block 5h2 of the middle block row B2 in this embodiment) and the axially outermost hole 8(that of the second bored block 5h2 of the shoulder block row B3 in this embodiment) is set in a range of not less than 20 % but not more than 30 % of the ground contacting width Tw.

The first bored block 5h1 is provided with a reinforcing part 10 which, in order to reinforce the blind hole 8, protrudes into the main groove 3(3B) with partially narrowing the main groove, to secure a sufficient wall thickness t (rubber thickness) around the blind hole 8.
Here, the wall thickness t is measured radially of the center of the blind hole 8 from the edge of the blind hole 8 to the edge of the bored block (edge of the reinforcing part 10).

The wall thickness t is preferably set to be not less than 5 mm, more preferably not less than 6 mm.
In other words, in the case that it is desired that the blind hole 8 is formed at a position near the main groove 3, and if the blind hole 8 is formed at such position, the wall thickness becomes less than 5 mm, the reinforcing part 10 should be provided in order to secure a sufficient wall thickness t.

However, if the wall thickness t in the reinforcing part 10 is excessively increased, the cross sectional area of the main grooves 3 (3B) is decreased, and as a result, the drainage of the groove and the self discharging of the snow/mud pushed into the groove become worse. Therefore, the wall thickness t in the reinforcing part 10 is preferably not more than 15 mm, more preferably not more than 8 mm.

By providing the reinforcing part 10, it becomes possible to form the blind hole 8 at a position near the main groove 3(3B) such that the axial distance wh between the farthest point of the blind hole from the center line 3h of the main groove 3(3B) which center line 3h is based on the assumption that the protruding reinforcing parts 10 are not counted and the center line 3h
is less than 12.0 mm, further even less than 10.0mm. Thus, the design freedom of the studs' positions can be increased, and it becomes possible to further improve the on-the-ice performance of the tire.

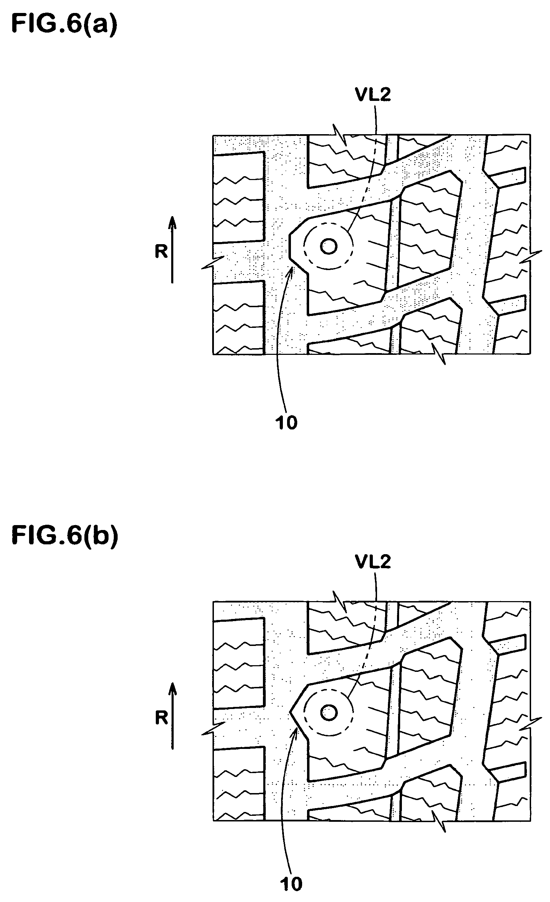

In this embodiment, as shown in Figs.5(a) and 5(b), the side surface of the reinforcing part 10 which faces the main groove (and further faces a transverse groove in this example) is defined by a part of the side surface of a cylinder or a cone of which center axis substantially coincides with the center axis of the blind hole 8. Thus, the edge of the reinforcing part 10 becomes a circular arc.
Aside from the configuration presenting the edge of a circular arc, such a configuration that presents a polygonal line, for example, a polygonal line made up of three segments as shown in Fig.6(a), a polygonal line made up of two segments as shown in Fig.6(b) or the like can be employed as far as the reinforcing part 10 protrudes into the main groove 3 and the wall thickness t meets the above-mentioned limitations.
As above the reinforcing part 10 can protrude into the transverse groove 4 as well as the main groove 3 as shown in Fig.3.

It is preferable that each of the bored blocks 5h is provided around the blind hole 8 with an annularly continuous region N where there is no sipe S and there is no groove as shown in Fig.3.
The annularly continuous region N has a radius Nr which is at least 5 mm, more preferably not less than 8 mm, still more preferably not less than 10 mm from the center 8c of the blind hole 8.
Therefore, in cooperation with the reinforcing part 10 if formed, the annularly continuous region N can increase the rigidity of the surrounding wall of the blind hole 8, and thereby prevent the stud P from leaning and being pulled out of the blind hole.

In the drawings, "vL1" denotes the outline of annularly continuous region N, and "VL2" denotes the outline of the flange part 21 of the stud P inserted into the blind hole 8. As shown, the annularly continuous region N is larger than the flange part 21, therefore, the stud P is firmly fixed to the block and can produce a large traction and a large braking force.

In this embodiment, all of the blind holes 8 disposed on the tire are placed at different circumferential positions. In other words, each of the blind holes 8 is not aligned with another blind hole in the tire axial direction. Therefore, the variation of the traction or braking force can be reduced, and also vibrations during running can be reduced.
Further, in each of the rows B, the first bored blocks 5h1 and the second bored blocks 5h2 are alternately arranged in the circumferential direction.
Furthermore, in each of the rows B, the bored blocks 5h and non-bored blocks 5n are arranged in a sequence such that a group of (5h, 5n, 5h, 5n and 5n), more specifically (5h2, 5n, 5h1, 5n and 5n) is repeated in the circumferential direction.

Meantime, the reinforcing part 10 which protrudes into the main groove 3 (3B) decreases the cross sectional area of the main groove more or less. Therefore, if possible, it is desirable for the shoulder main groove 3B to set its minimum groove width wi, which occurs at the positions of the reinforcing parts 10, within a range of not less than 0.4 times, more preferably not less than 0.5 times, but not more than 0.9 times, more preferably not more than 0.8 times the maximum groove width wj or groove width measured at other positions than those of the reinforcing parts 10.

Further, it is also desirable that, in order to compensate such a decrease in the main groove width, the reinforcing parts 10 are formed near or at T-junctions 9 of the main groove 3 and some of the transverse grooves 4 (specifically, T-junction 9a of the grooves 3B and 4A, and T-junction 9b of the grooves 3B and 4B in this embodiment) as shown in Fig.3.

### Comparison tests

studded radial tires of size 195/65R15 (wheel rim size: 15X6JJ) having specifications shown in Table 1 were prepared and tested as follows.

All the test tires had the same structure and same tread pattern excepting the blind holes and reinforcing parts. In order to enhance the fixation of the studs to the blind holes, an anaerobic adhesive was used.

### Starting traction and Braking force test:

A front-engine rear-drive passenger car provided with test tires (tire pressure: 180 kPa) was started on icy road and snowy road, and the starting traction was evaluated by the test driver. The results are indicated in Table 1 by an index based on Ref.1 being 100, wherein the larger the value, the better the starting traction.

Further, the braking distance of the test car was measured on the icy road and snowy road, when sudden braking was made at running speed of 30 km/h. The results are indicated in Table 1 by an index based on Ref.1 being 100, wherein the larger the value, the shorter the braking distance, namely, the better the braking performance on icy and snowy roads.

### Cornering performance test:

on the icy road and snowy road, the test car was turned along a circle of 40 meters radius, and the cornering performance was evaluated based on the lap time and the test driver's feeling. The results are indicated in Table 1 by an index based on Ref.1 being 100, wherein the larger the value, the better the cornering performance on icy and snowy roads.

### Durability test:

The test car was run for 20,000 km on the snowy road. Then, the number of pulled-out studs was counted. The results are indicated in Table 1 by an index based on Ref.1 being 100, wherein the larger the value, the better the resistance to pull-out.

**Table 1**

| Tire | Ref.1 | Ref.2 | Ref.3 | Ex.1 | Ex.2 | Ex.3 | Ex.4 | Ex.5 | Ex.6 |
|---|---|---|---|---|---|---|---|---|---|
| Tread pattern | Fig.7(a) | Fig.7(b) | Fig.1 | Fig.1 | Fig.1 | Fig.1 | Fig.1 | Fig.1 | Fig.1 |
| Ground contacting width TW(mm) | 170.0 | 170.0 | 170.0 | 170.0 | 170.0 | 170.0 | 170.0 | 170.0 | 170.0 |
| Distance Ws(mm) | 60.5 | 30.0 | 20.0 | 30.0 | 23.0 | 26.0 | 33.0 | 36.0 | 40.0 |
| Ws/TW (%) | 35.6 | 17.6 | 11.8 | 17.6 | 13.5 | 15.3 | 19.4 | 21.2 | 23.5 |
| Reinforcing part | none | none | | | | | | | |
| Min. thickness t(mm) | - | 3.00 | 6.75 | 6.75 | 7.75 | 7.75 | 9.75 | 6.75 | 6.75 |
| Annularly continuous region around blind hole | | | | | | | | | |
| Radius Nr(mm) | 8 | 8 | 8 | 8 | 6 | 7 | 10 | 12 | 16 |
| Distance Wh(mm) | | | | | | | | | |
| in Middle block rows | - | - | 10.0 | 10.0 | 10.0 | 10.0 | 10.0 | 10.0 | 10.0 |
| in Shoulder block rows | - | - | 13.0 | 13.0 | 13.0 | 13.0 | 13.0 | 13.0 | 13.0 |
| Distance Wm(mm) | 15.0 | 45.0 | 45.0 | 45.0 | 45.0 | 45.0 | 45.0 | 25.0 | 55.0 |
| Wm/TW(%) | 8.8 | 26.5 | 26.5 | 26.5 | 26.5 | 26.5 | 26.5 | 14.7 | 32.4 |
| Shoulder main groove | | | | | | | | | |
| Minimum groove width Wi(mm) | - | - | 1.8 | 5.0 | 2.7 | 3.6 | 6.0 | 7.0 | 8.1 |
| Maximum groove width Wj(mm) | 9.0 | 9.0 | 9.0 | 9.0 | 9.0 | 9.0 | 9.0 | 9.0 | 9.0 |
| Wi/Wj | - | - | 0.20 | 0.56 | 0.30 | 0.40 | 0.67 | 0.78 | 0.90 |
| Test results | | | | | | | | | |
| Starting traction | | | | | | | | | |
| on icy road | 100 | 105 | 115 | 110 | 120 | 120 | 115 | 90 | 95 |
| on snowy road | 100 | 100 | 97 | 100 | 99 | 100 | 100 | 100 | 100 |
| Braking force | | | | | | | | | |
| on icy road | 100 | 105 | 115 | 110 | 120 | 120 | 115 | 90 | 95 |
| on snowy road | 100 | 100 | 97 | 100 | 98 | 100 | 100 | 100 | 100 |
| Cornering performance | | | | | | | | | |
| on icy road | 100 | 105 | 115 | 110 | 120 | 120 | 115 | 90 | 95 |
| on snowy road | 100 | 100 | 96 | 100 | 98 | 100 | 100 | 100 | 100 |
| Durability | 100 | 90 | 95 | 100 | 96 | 98 | 120 | 110 | 115 |

## Claims

1. A pneumatic tire comprising:
a tread portion (2) defining a ground contacting width and provided with a plurality of circumferential rows (B) of a plurality of blocks (5), said plurality of blocks (5) defined by a plurality of main grooves (3) extending continuously in the tire circumferential direction, a plurality of transverse grooves (4A) extending between the main grooves (3), and a plurality of transverse grooves (4B) extending between the main grooves (3) and tread edges (2e),
said circumferential rows (B) including at least one circumferential row (B2, B3) whose blocks (5) include a plurality of bored blocks (5h) each provided in the top surface (5s) thereof with a blind hole (8) for installing a stud (P),
wherein said blind hole (8) is disposed axially outward of a position spaced apart from the tire equator (C) by an axial distance of at least 13 % of the ground contacting width (Tw), and
every two circumferentially adjacent blind holes (5h) are shifted from each other in the tire axial direction, and
said plurality of bored blocks (5h) including at least one bored block (5h1), whose blind hole (8) is shifted towards the periphery of the bored block (5h1) and towards one of said plurality of main grooves (3), and which is provided with a reinforcing part (10) for reinforcing the blind hole (8),
wherein said reinforcing part (10) protrudes into the main groove (3) with decreasing the groove width of the main groove (3),
**characterized in that**
the reinforcing part (10) is protrudingly formed so as to provide a wall thickness (t) of at least 5 mm for a wall surrounding the blind hole (8),
with said plurality of blocks (5) inclusive of the bored blocks (5h) having a geometrically same configuration excepting the protrudingly provided reinforcing part (10).

2. The pneumatic tire according to claim 1, wherein
the blind hole (5h) reinforced by said reinforcing part (10) is disposed within an axial range of 12.0 mm from the center line (3h) of said main groove (3) which center line (3h) is determined by excepting the reinforcing part (10) protruding into the main groove (3).

3. The pneumatic tire according to claim 1 or 2, wherein
each of the bored blocks (5h) is provided with sipes (s), but in a region encompassed by a circle centered at the center of the blind hole (8) and having a radius of at least 5 mm, there is no sipe (s) and there is no groove (3, 4).

4. The pneumatic tire according to claim 1, 2 or 3, wherein
on each side of the tire equator (C), the axial distance between the axially innermost blind hole and the axially outermost blind hole is not less than 20 % but not more than 30 % of the ground contacting width (Tw).

5. The pneumatic tire according to claim 1, 2, 3 or 4, wherein
the main groove (3) into which said reinforcing part (10) protrudes, has a minimum groove width (wi) occurring at the position of the reinforcing part (10), and
the minimum groove width (wi) is 0.4 to 0.9 times the maximum groove width (wj) occurring at other position.

6. The pneumatic tire according to any one of the preceding claims, wherein
each said circumferential row (B) includes at least two bored blocks (5h1, 5h2) whose blind holes (8) are disposed at different axial positions.

7. The pneumatic tire according to any one of the preceding claims, wherein
said plurality of main grooves (3) include a pair of axially outermost shoulder main grooves (3B) and one or two crown main grooves (3A) therebetween,
said plurality of circumferential rows (B) include a pair of shoulder block rows (B3) each made up of shoulder blocks (5c) defined by one of the shoulder main grooves (3B) and the adjacent tread edge (2e) and further shoulder transverse grooves (4B) extending therebetween,
in the case of one crown main groove (3A), the block rows (B) further include two middle block rows (B2) each made up of middle blocks (58) defined by one of the shoulder main grooves (3B) and the crown main groove (3A) and further middle transverse grooves (4A) extending therebetween,
in the case of two crown main grooves (3A), the block rows further include two middle block rows (B2) each made up of middle blocks (5B) defined by one of the shoulder main grooves (3B) and the adjacent crown main groove (3A) and further middle transverse grooves (4A) extending therebetween.

8. The pneumatic tire according to claim 7, wherein
said reinforcing part (10) is formed at a T-junction of one of the shoulder main grooves (3B) and one of the middle transverse grooves (4A) and the shoulder transverse grooves (4B) so as to protrude toward the T-junction.

9. The pneumatic tire according to claim 8, wherein
each of the middle block rows (B2) includes at least two kinds of bored blocks (5h1, 5h2) whose blind holes (8) are disposed at different axial positions.

10. The pneumatic tire according to any one of the claims 7 to 9, wherein
each of the shoulder block rows (B3) includes at least two kinds of bored blocks (5h1, 5h2) whose blind holes (8) are disposed at different axial positions.

11. The pneumatic tire according to claim 1, wherein
the edge of said reinforcing part (10) at the top surface (5s) of the bored block (5h) is a circular arc.

12. The pneumatic tire according to claim 1, wherein
the edge of said reinforcing part (10) at the top surface (5s) of the bored block (5h) is a polygonal line.

13. A studded tire comprising the pneumatic tire as set forth in any one of the preceding claims and studs (P) fitted in the blind holes (8).

## Patentansprüche

1. Luftreifen umfassend:
einen Laufflächenabschnitt (2), der eine Bodenkontaktbreite definiert und mit einer Mehrzahl von Umfangsreihen (B) aus einer Mehrzahl von Blöcken (5) versehen ist, wobei die Mehrzahl von Blöcken (5) durch eine Mehrzahl von Hauptrillen (3), die sich durchgehend in der Reifenumfangsrichtung erstrecken, eine Mehrzahl von Querrillen (4A), die sich zwischen den Hauptrillen (3) erstrecken, und eine Mehrzahl von Querrillen (4B), die sich zwischen den Hauptrillen (3) und Laufflächenkanten (2e) erstrecken, definiert ist,
wobei die Umfangsreihen (B) zumindest eine Umfangsreihe (B2, B3) umfassen, deren Blöcke (5) eine Mehrzahl von gebohrten Blöcken (5h) umfassen, die jeweils in ihrer oberen Oberfläche (5s) mit einem Sackloch (8) zum Einbauen eines Spikes (P) versehen sind,
wobei das Sackloch (8) axial außen von einer Position angeordnet ist, die von dem Reifenäquator (C) in einem axialen Abstand von zumindest 13 % der Bodenkontaktbreite (Tw) beabstandet ist, und
immer zwei in Umfangsrichtung benachbarte Sacklöcher (5h) voneinander in der axialen Richtung des Reifens verschoben sind, und
die Mehrzahl von gebohrten Blöcken (5h) zumindest einen gebohrten Block (5h1) umfasst, dessen Sackloch (8) in Richtung des Umfanges des gebohrten Blocks (5h1) und in Richtung von einer der Mehrzahl von Hauptrillen (3) verschoben ist, und der mit einem Verstärkungsteil (10) zum Verstärken des Sackloches (8) versehen ist,
wobei der Verstärkungsteil (10) in die Hauptrille (3) mit abnehmender Rillenbreite der Hauptrille (3) vorsteht,
**dadurch gekennzeichnet, dass**
der Verstärkungsteil (10) derart vorstehend gebildet ist, dass er eine Wanddicke (t) von zumindest 5 mm für eine Wand, die das Sackloch (8) umgibt, bereitstellt,
wobei die Mehrzahl von Blöcken (5), einschließlich die gebohrten Blöcke (5h), eine geometrische gleiche Ausgestaltung mit Ausnahme des vorstehend vorgesehenen Verstärkungsteils (10) aufweist.

2. Luftreifen nach Anspruch 1, wobei das Sackloch (5h), das durch den Verstärkungsteil (10) verstärkt ist, innerhalb eines axialen Bereiches von 12,0 mm von der Mittellinie (3h) der Hauptrille (3) angeordnet ist, wobei die Mittellinie (3h) durch Ausnehmen des Verstärkungsteils (10), der in die Hauptrille (3) vorsteht, bestimmt ist.

3. Luftreifen nach Anspruch 1 oder 2, wobei ein jeder der gebohrten Blöcke (5h) mit Feinschnitten (s) versehen ist, aber in einem Bereich, der durch einen Kreis eingeschlossen ist, der in der Mitte des Sackloches (8) zentriert ist und einen Radius von zumindest 5 mm aufweist, es keinen Feinschnitt (s) gibt und es keine Rille (3, 4) gibt.

4. Luftreifen nach Anspruch 1, 2 oder 3, wobei auf jeder Seite des Reifenäquators (C) der axiale Abstand zwischen dem axial innersten Sackloch und dem axial äußersten Sackloch nicht kleiner als 20 %, aber nicht größer als 30 % der Bodenkontaktbreite (Tw) ist.

5. Luftreifen nach Anspruch 1, 2, 3 oder 4, wobei
die Hauptrille (3), in die der Verstärkungsteil (10) vorsteht, eine minimale Rillenbreite (wi) aufweist, die an der Position des Verstärkungsteils (10) auftritt, und
die minimale Rillenbreite (wi) das 0,4- bis 0,9-fache der maximalen Rillenbreite (wj), die an einer anderen Position auftritt, beträgt.

6. Luftreifen nach einem der vorhergehenden Ansprüche, wobei eine jede Umfangsreihe (B) zumindest zwei gebohrte Blöcke (5h1, 5h2) umfasst, während Sacklöcher (8) an unterschiedlichen axialen Positionen angeordnet sind.

7. Luftreifen nach einem der vorhergehenden Ansprüche, wobei
die Mehrzahl von Hauptrillen (3) ein Paar axial äußerste Schulterhauptrillen (3B) und eine oder zwei Kronenhauptrillen (3A) dazwischen umfasst,
die Mehrzahl von Umfangsreihen (B) ein Paar Schulterblockreihen (B3) umfasst, von denen jede aus Schulterblöcken (5c) hergestellt ist, die durch eine der Schulterhauptrillen (3B) und die benachbarte Laufflächenkante (2e) und weitere, sich dazwischen erstreckende Schulterquerrillen (4B) definiert ist,
in dem Fall von einer Kronenhauptrille (3A) die Blockreihen (B) ferner zwei mittlere Blockreihen (B2) umfassen, die jeweils aus mittleren Blöcken (5B) hergestellt sind, die durch eine der Schulterhauptrillen (3B) und die Kronenhauptrille (3A) und weitere, sich dazwischen erstreckende, mittlere Querrillen (4A) definiert sind,
in dem Fall von zwei Kronenhauptrillen (3A) die Blockreihen ferner zwei mittlere Blockreihen (B2) umfassen, die jeweils aus mittleren Blöcken (5B) hergestellt sind, die durch eine der Schulterhauptrillen (3B) und die benachbarte Kronenhauptrille (3A) und weitere, sich dazwischen erstreckende, mittlere Querrillen (4A) definiert sind.

8. Luftreifen nach Anspruch 7, wobei der Verstärkungsteil (10) an einem T-Übergang von einer der Schulterhauptrillen (3B) und einer von den mittleren Querrillen (4A) und den Schulterquerrillen (4B) derart gebildet ist, dass er in Richtung des T-Übergangs vorsteht.

9. Luftreifen nach Anspruch 8, wobei jede der mittleren Blockreihen (B2) zumindest zwei Arten von gebohrten Blöcken (5h1, 5h2) umfasst, deren Sacklöcher (8) an unterschiedlichen axialen Positionen angeordnet sind.

10. Luftreifen nach einem der Ansprüche 7 bis 9, wobei jede der Schulterblockreihen (B3) zumindest zwei Arten von gebohrten Blöcken (5h1, 5h2) umfasst, deren Sacklöcher (8) an unterschiedlichen axialen Positionen angeordnet sind.

11. Luftreifen nach Anspruch 1, wobei die Kante des Verstärkungsteils (10) an der oberen Oberfläche (5s) des gebohrten Blocks (5h) ein Kreisbogen ist.

12. Luftreifen nach Anspruch 1, wobei die Kante des Verstärkungsteils (10) an der oberen Oberfläche (5s) des gebohrten Blocks (5h) eine polygonale Linie ist.

13. Spike-Reifen, der den Luftreifen nach einem der vorhergehenden Ansprüche und Spikes (P), die in die Sacklöcher (8) eingepasst sind, umfasst.

## Revendications

1. Bandage pneumatique comprenant : une portion formant bande de roulement (2) définissant une largeur de contact au sol et dotée d'une pluralité de rangées circonférentielles (B) d'une pluralité de blocs (5), ladite pluralité de blocs (5) étant définie par une pluralité de rainures principales (3) s'étendant en continu dans la direction circonférentielle du pneumatique, par une pluralité de rainures transversales (4B) s'étendant entre les rainures principales (3), et par une pluralité de rainures transversales (4B) s'étendant entre les rainures principales (3) et les bordures de roulement (2e),
lesdites rangées circonférentielles (B) incluant au moins une rangée circonférentielle (B2, B3) dont les blocs (5) incluent une pluralité de blocs percés (5h) dotés chacun dans sa surface supérieure (5s) d'un trou borgne (8) pour installer un clou (P),
dans lequel ledit trou borgne (8) est disposé axialement à l'extérieur d'une position écartée de l'équateur de pneumatique (C) d'une distance axiale qui est au moins 13 % de la largeur de contact au sol (T_{W}), et chaque groupe de deux trous borgnes circonférentiellement adjacents (5h) sont décalés l'un de l'autre dans la direction axiale du pneumatique, et
ladite pluralité de blocs percés (5h) inclut au moins un bloc percé (5h1) dont le perçage borgne (8) est décalé vers la périphérie du bloc percé (5h1) et vers l'une de ladite pluralité de rainures principales (3), et qui est pourvu d'une partie de renforcement (10) pour renforcer le trou borgne (8),
dans lequel ladite partie de renforcement (10) se projette dans la rainure principale (3) en diminuant la largeur de la rainure principale (3),
**caractérisé en ce que**
la partie de renforcement (10) est formée en projection de manière à présenter une épaisseur de paroi (t) d'au moins 5 mm pour une paroi qui entoure le trou borgne (8),
dans lequel ladite pluralité de blocs (5), y compris les blocs percés (5h) ont une configuration géométriquement identique à l'exception de la partie de renforcement prévue en projection (10).

2. Bandage pneumatique selon la revendication 1, dans lequel
le trou borgne (5h) renforcé par ladite partie de renforcement (10) est disposé à l'intérieur d'une plage axiale de 12,0 mm depuis la ligne centrale (3h) de ladite rainure principale (3), ladite ligne centrale (3h) étant déterminée en exceptant la partie de renforcement (10) en projection dans la rainure principale (3).

3. Bandage pneumatique selon la revendication 1 ou 2, dans lequel
chacun des blocs percés (5h) est doté de fentes (s), mais dans une région englobée par un cercle centré au niveau du cercle du perçage borgne (8) et ayant un rayon d'au moins 5 mm, il n'y a aucune fente (s) et il n'y a aucune rainure (3, 4).

4. Bandage pneumatique selon la revendication 1, 2 3, dans lequel
sur chaque côté de l'équateur de pneumatique (C), la distance axiale entre le trou borgne axialement le plus à l'intérieur et le trou borgne axialement le plus à l'extérieur n'est pas inférieure à 20 % et pas supérieure à 30 % de la largeur de contact au sol (T_{W}).

5. Bandage pneumatique selon la revendication 1, 2, 3 ou 4, dans lequel la rainure principale (3) dans laquelle se projette ladite partie de renforcement (10) a une largeur minimum (wi) qui apparaît à la position de la partie de renforcement (10), et
la largeur minimum (wi) de la gorge est de 0,4 à 0,9 fois la largeur maximum (wj) de la rainure qui apparaît à une autre position.

6. Bandage pneumatique selon l'une quelconque des revendications précédentes, dans lequel
chacune desdites rangées circonférentielles (B) inclut au moins deux blocs percés (5h1, 5h2) dont les trous borgnes (8) sont disposés à différentes positions axiales.

7. Bandage pneumatique selon l'une quelconque des revendications précédentes, dans lequel
ladite pluralité de rainures principales (3) inclut une paire de rainures principales d'épaulement axialement tout à fait à l'extérieur (3B) et une ou deux rainures principales de couronne (3A) entre celles-ci,
ladite pluralité de rainures circonférentielles (B) inclut une paire de rangées de blocs d'épaulement (B3), constituées chacune de blocs d'épaulement (5c) définis par l'une des rainures principales d'épaulement (3B) et par la bordure de roulement adjacente (2e) et par d'autres rainures transversales d'épaulement (4B) s'étendant entre celles-ci,
dans le cas d'une rainure principale de couronne (3A), les rangées de blocs (B) incluent encore deux rangées de blocs médianes (B2) constituées chacune de blocs médians (5B) définis par l'une des rainures principales d'épaulement (3B) et par la rainure principale de couronne (3A) et en outre par des rainures transversales médianes (4A) s'étendant entre celles-ci,
dans le cas de deux rainures principales de couronne (3A), les rangées de blocs incluent en outre deux rangées de blocs médianes (B2) constituées chacune de blocs médians (5B) définis par l'une des rainures principales d'épaulement (3B) et par la rainure principale de couronne adjacente (3A) et par d'autres rainures transversales médianes (4A) s'étendant entre celles-ci.

8. Bandage pneumatique selon la revendication 7, dans lequel
ladite partie de renforcement (10) est formée au niveau d'une jonction en T de l'une des rainures principales d'épaulement (3B) et de l'une des rainures transversales médianes (4A) et les rainures transversales d'épaulement (4B) de manière à se projeter vers la jonction en T.

9. Bandage pneumatique selon la revendication 8, dans lequel
chacune des rangées de blocs médianes (B2) inclut au moins deux sortes de blocs percés (5h1, 5h2) dont les trous borgnes (8) sont disposés à différentes positions axiales.

10. Bandage pneumatique selon l'une quelconque des revendications 7 à 9, dans lequel
chacune des rangées de blocs d'épaulement (B3) inclut au moins deux sortes de blocs percés (5h1, 5h2) dont les trous borgnes (8) sont disposés à différentes positions axiales.

11. Bandage pneumatique selon la revendication 1, dans lequel
la bordure de ladite partie de renforcement (10) à la surface au sommet (5s) du bloc percé (5h) est un arc circulaire.

12. Bandage pneumatique selon la revendication 1, dans lequel
la bordure de ladite partie de renforcement (10) à la surface au sommet (5s) du bloc percé (5h) est une ligne polygonale.

13. Pneumatique clouté comprenant le bandage pneumatique selon l'une quelconque des revendications précédentes et des clous (P) engagés dans les trous borgnes (8).
